# EUROPEAN PATENT SPECIFICATION

(11) **EP 4 092 461 B1**
(45) Date of publication and mention of the grant of the patent: **06.03.2024**
(21) Application number: 21174815.7
(22) Date of filing: 19.05.2021
(51) Int. Cl.: G02B 7/18, G03B 21/14, G02B 7/182, G03B 21/20, G03B 21/16

(54) **OPTOELECTRONIC MODULE AND PROCESS FOR THE MANUFACTURE THEREOF**
OPTOELEKTRONISCHES MODUL UND VERFAHREN ZU DESSEN HERSTELLUNG
MODULE OPTOÉLECTRONIQUE ET PROCÉDÉ POUR SA FABRICATION

(43) Date of publication of application: 23.11.2022
(73) Proprietor: Laserworld (Switzerland) AG, 8574 Lengwil (CH)
(72) Inventor: Werner, Martin, 8574 Lengwil (CH)
(74) Representative: Meyer zu Bexten, Elmar

(56) References cited:
- JP-A- 2002 277 791
- US-A1- 2002 126 717
- US-A1- 2006 262 821
- US-B2- 9 029 818

## Description

### Technical Field

The invention relates to the product and process as per the first portion of the independent claims.

### Background Art

By laser diode (LD), injection laser diode (ILD), or diode laser is meant any semiconductor device in which a light-emitting diode pumped directly with electrical current creates lasing conditions at its junction. NPL1 provides a comprehensive treatment of these and other photonic integrated circuits.

Diode array modules are commonly employed in laser light shows, that is, visual displays wherein substantially collimated beams of coherent light generated by one or more laser sources are projected aerially or scanned in two dimensions, usually with oscillating mirrors, to produce visible images on a projection surface. Differing substantially from conventional cinema and video area-filling displays, laser-light show images typically consist of high-contrast outline renderings and silhouettes. Images are produced by a vector graphics scanning method and retain the distinguishing properties of coherent laser light, namely its collimation, monochromaticity, or pure hue(s), and its fine interference patterns, or speckle. PTL1 discloses such method.

PTL2 discloses the product as per the first portion of Claim 1.

### Summary of invention

The invention is set out in the appended set of claims.

### Technical Problem

In display and other high-power laser systems, white light is produced by superimposing individual color channels such as red, green, and blue. This superposition is effected by beam combiners based on mirrors or dichroic filters in small holders that, when being transported, tend to misalign. Furthermore, heat dissipation causes nonuniform expansion or contraction of integral or connected components. These and other adverse effects are laid out in NPL2 and, if color fringing is to be avoided, necessitate realignment of optical components prior to each use.

### Solution to Problem

The problem is solved as per the second portion of Claim 1.

### Advantageous effect of invention

The invention provides for an essentially maintenance-free optoelectronic module. In a preferred embodiment, the module will resist misalignment across a temperature range of -36 °C to +110 °C.

### Brief description of drawings

Figure 1 is a perspective view of a first optoelectronic module.
Figure 2 is a perspective view of a second optoelectronic module.
Figure 3 is a perspective view of a first trough.

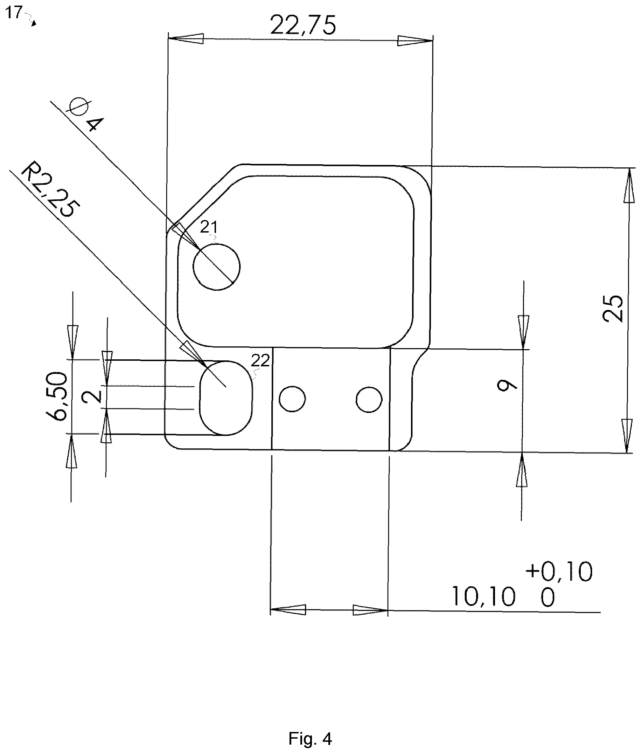

Figure 4 is a top view of the first trough.

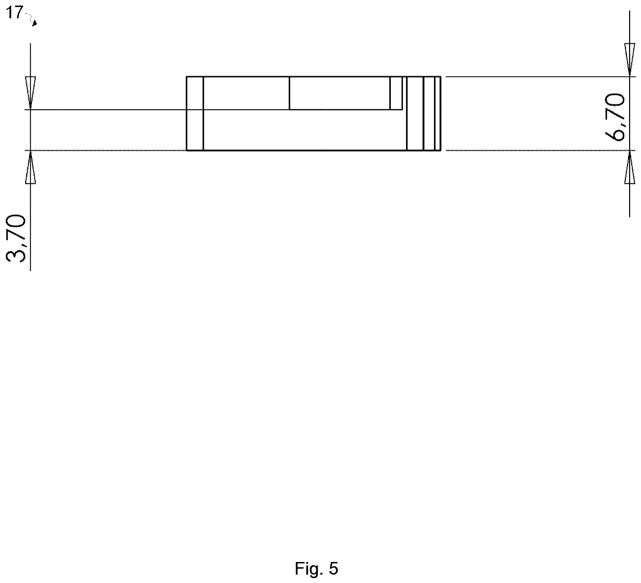

Figure 5 is a front view of the first trough.

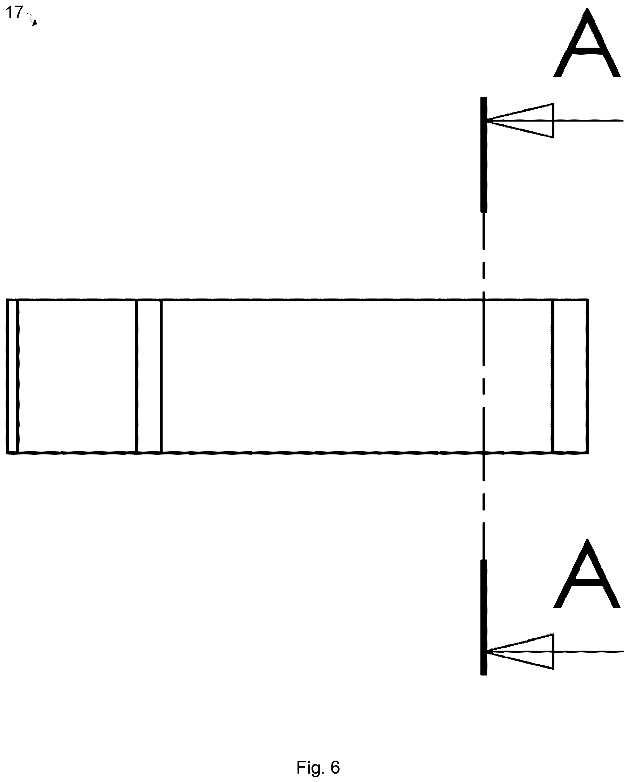

Figure 6 is a side view of the first trough.

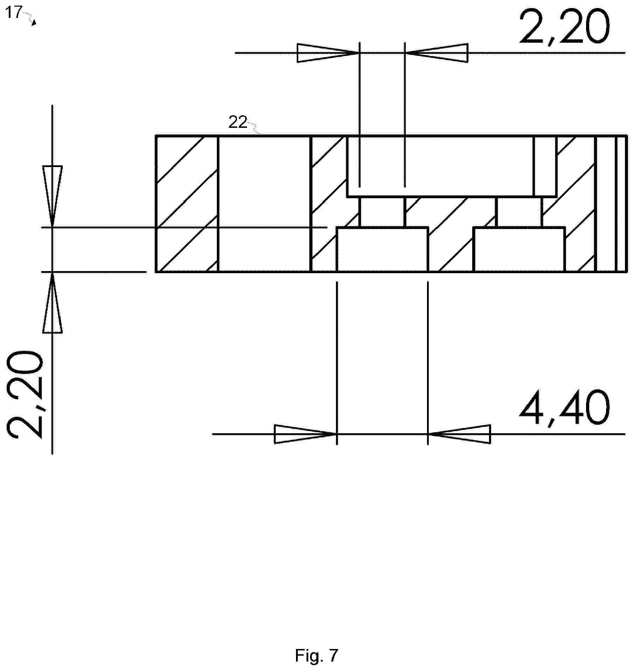

Figure 7 is a section taken along the line A-A of

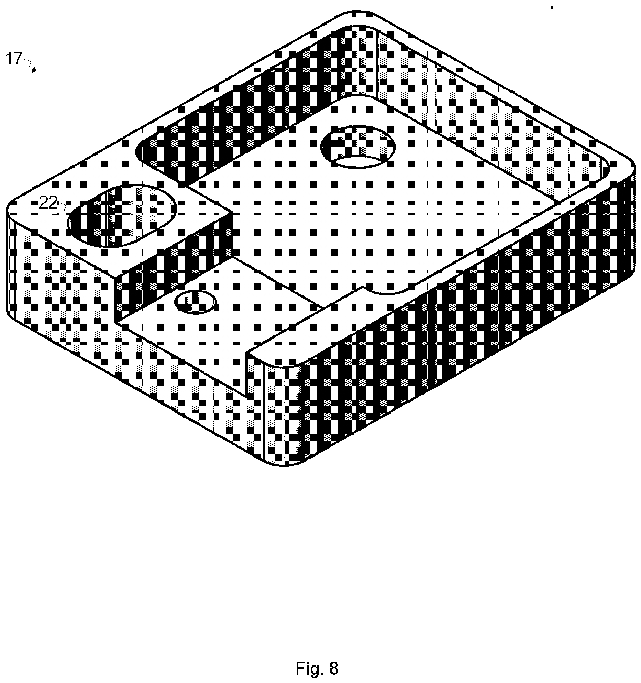

Figure 8 is a perspective view of a second trough.

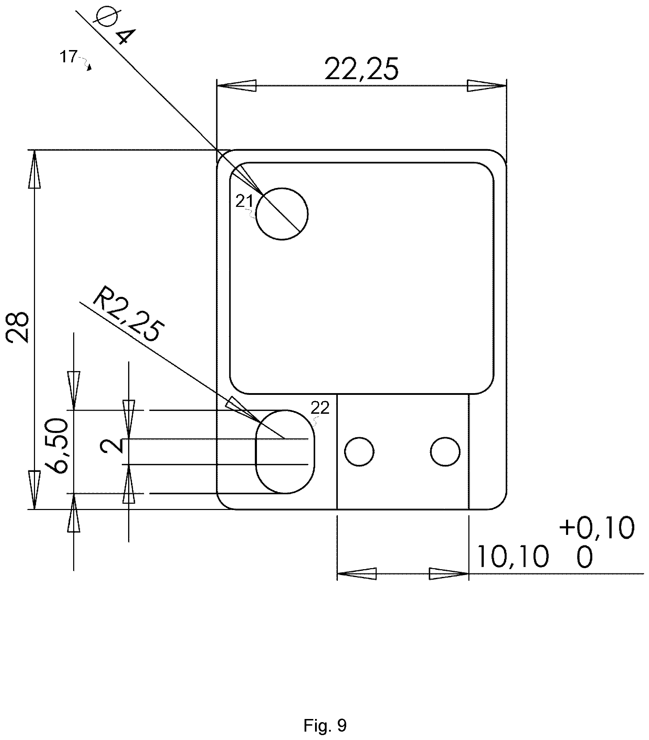

Figure 9 is a top view of the second trough.

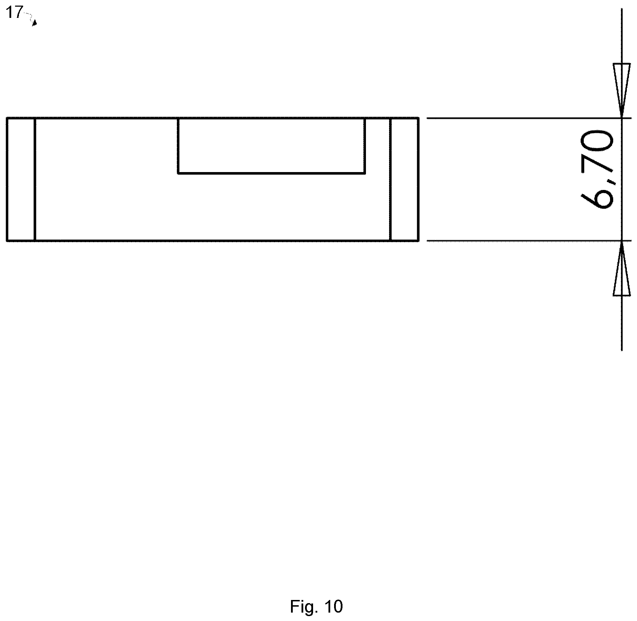

Figure 10 is a front view of the second trough.

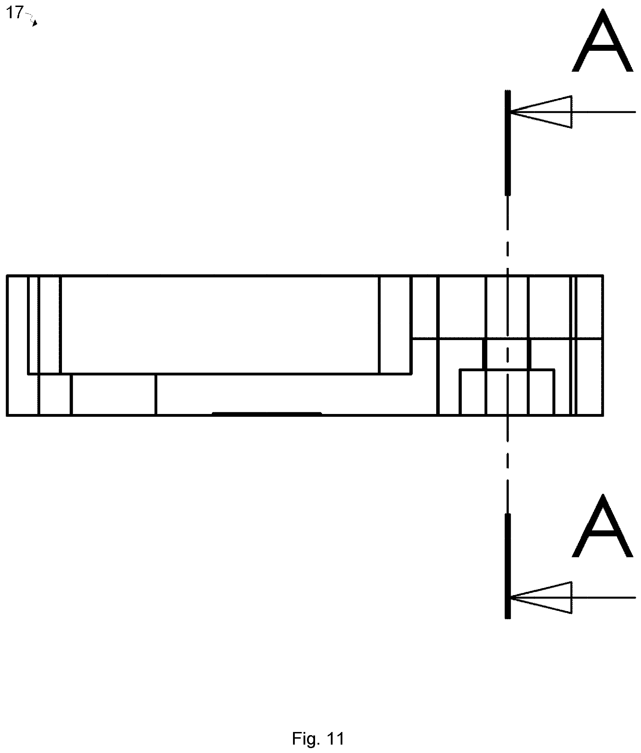

Figure 11 is a side view of the second trough.

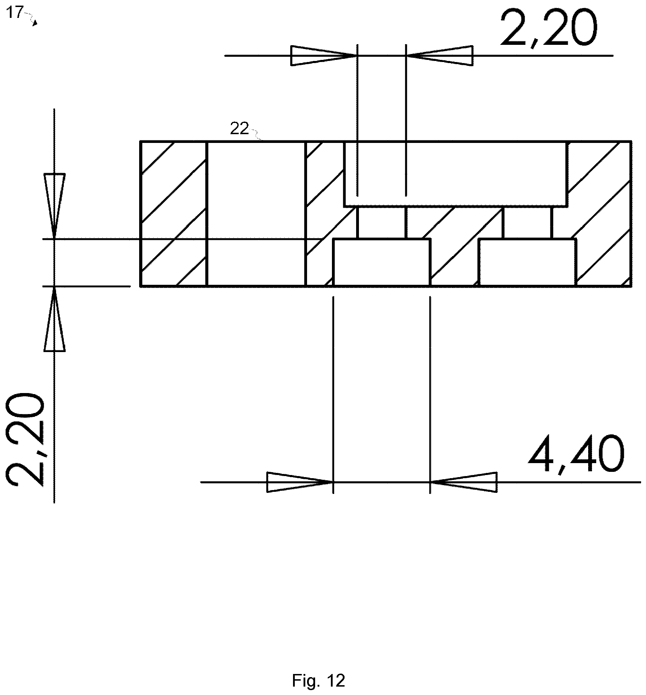

Figure 12 is a section taken along the line A-A of

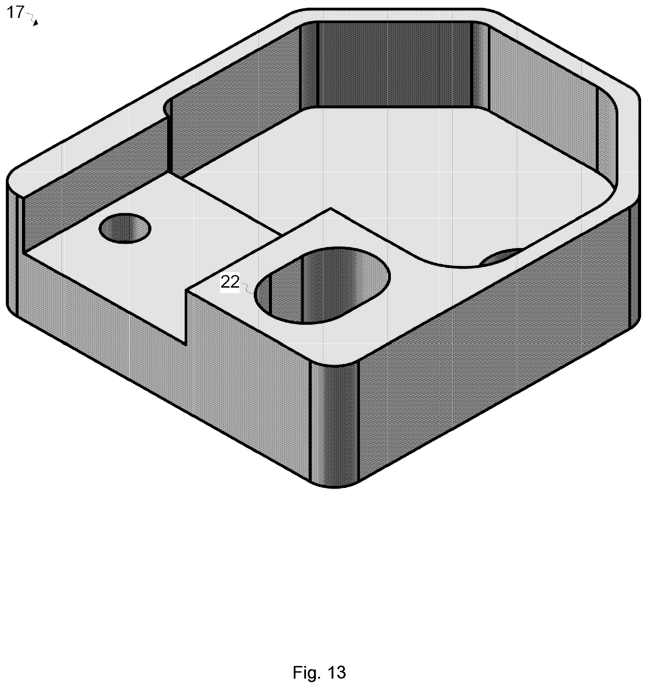

Figure 13 is a perspective view of a third trough.

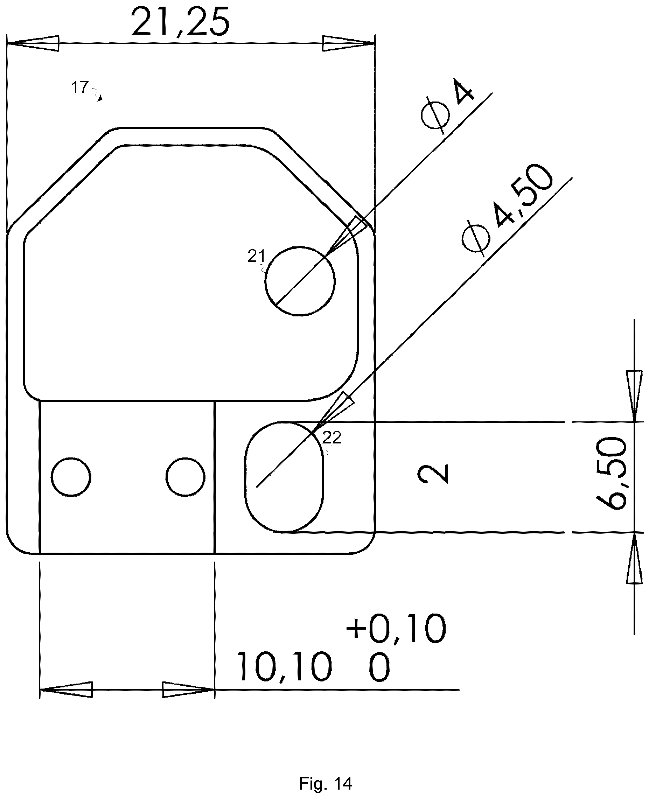

Figure 14 is a top view of the third trough.

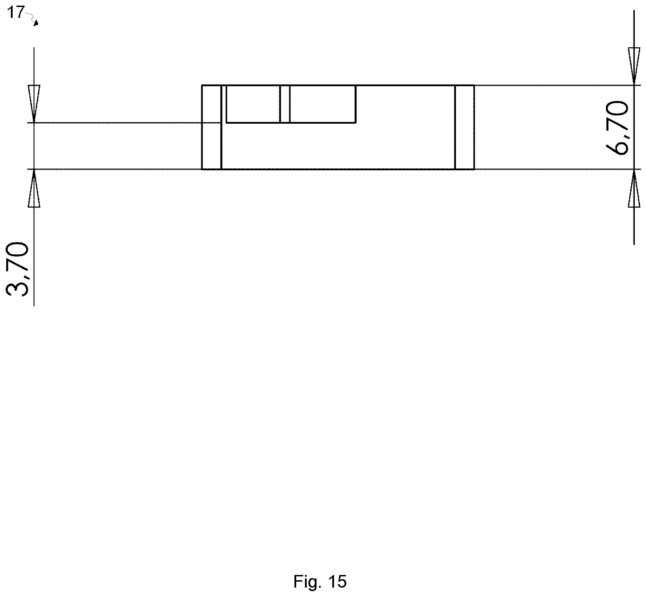

Figure 15 is a front view of the third trough.

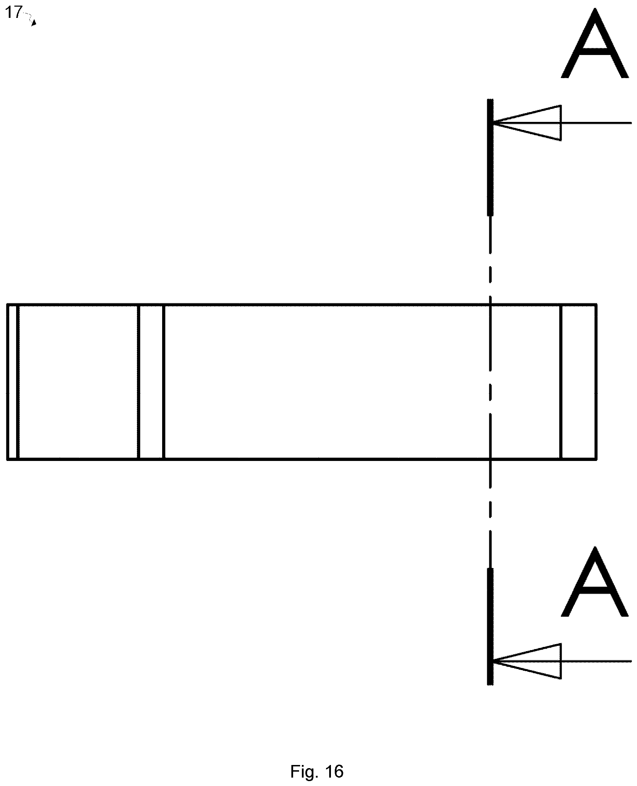

Figure 16 is a side view of the third trough.

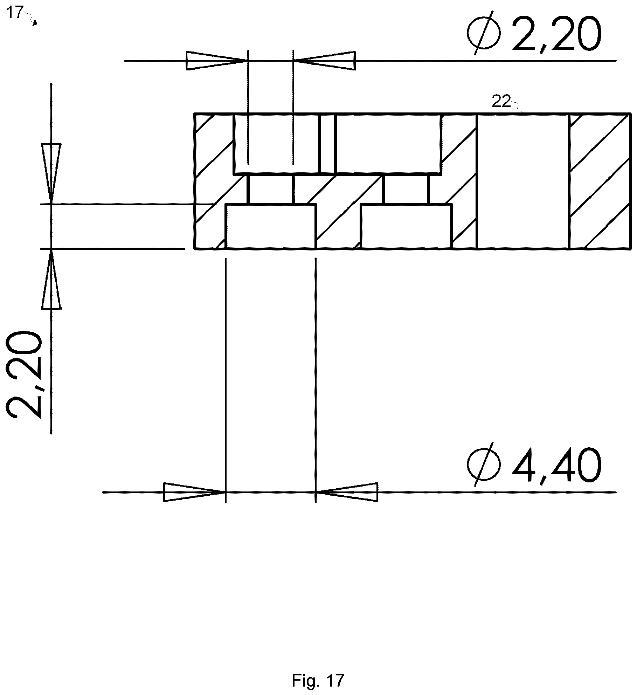

Figure 17 is a section taken along the line A-A of

All dimensions are given in millimeters.

### Description of embodiments

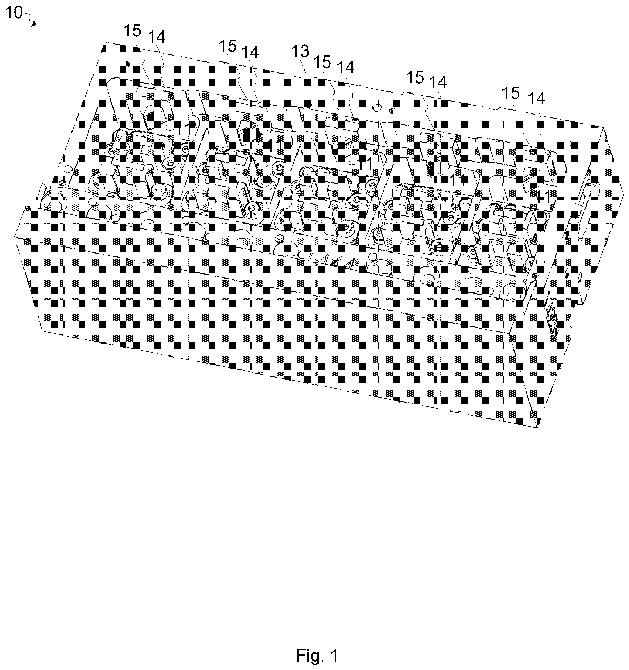

Figure 1 illustrates a module (10) for linear combination of five laser beams through knife edging. Here, each of the five small mirrors (11) used for knife-edge adjustment is installed on a rectangular pedestal (14) arrayed on a cascaded mounting surface (13). Partly obscured below each pedestal (14), a recess (15) is filled with an adhesive such that the corresponding mirror (11) is firmly joined on the surface (13) through the adhesive and pedestal (14). In the present embodiment, a thixotropic two-component (11, 12) adhesive based on polyurethane resin is employed.

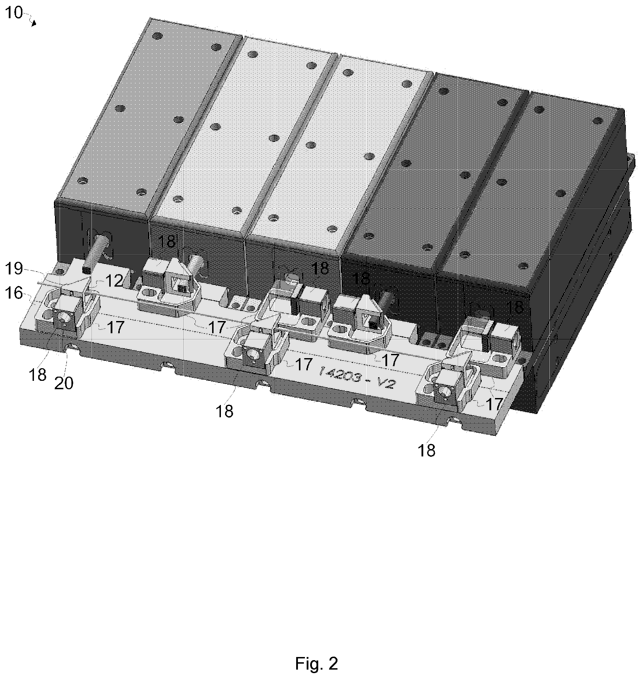

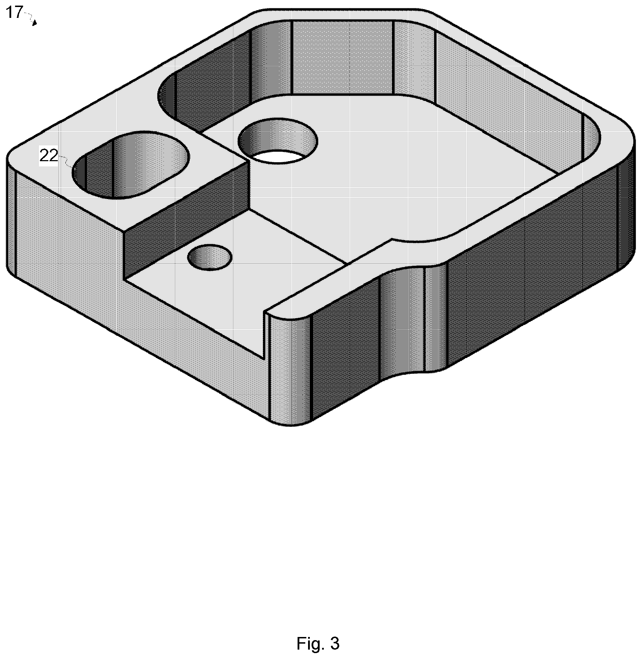

Figure 2 shows a beam combiner module (10) based on dichroic filters (12), sometimes referred to as dichroic mirrors, dispersed across a common baseboard (16). Seven troughs (17) consisting of a suitable aluminum alloy - as are elucidated in further detail in Figure 3 et seqq. - are affixed on the baseboard (16), with each trough (17) being connected to the baseboard (16) by an M3 screw (21) and bearing a cube (18) on its front rim.

The cube (18) depicted in the bottom left corner of Figure 2 serves as a kinematic mount for a small mirror holder (19), its three setscrews (20) accessible from the side facing the viewer. Upon precise factory setting by means of these setscrews (20) - resulting in the configuration shown -, the trough (17) is filled with adhesive until the head of the screw (21) is fully embedded and the holder (19), cube (18), and filter (12) are partly immersed. Once the adhesive has fully cured, the filter (12) will be permanently fixated relative to the baseboard (16) and the screw (21) prevented from loosening.

### Industrial applicability

The invention is applicable, among others, throughout the entertainment industry.

### Reference signs list

- 10: Module
- 11: Mirror
- 12: Filter
- 13: Surface
- 14: Pedestal
- 15: Recess
- 16: Baseboard
- 17: Trough
- 18: Cube
- 19: Holder
- 20: Setscrew
- 21: Screw
- 22: Hole

### Citation list

The following documents are cited hereinbefore.

### Patent literature

PTL1: US 2012105807 A (VOLPE CHRISTOPHER MICHAEL [US]; VOLPE DAVID JAMES [US]) 03.05.2012
PTL2: US 2002126717 A (FURUKAWA ELECTRIC CO LTD [JP]) 12.09.2002

### Non-patent literature

NPL1: COLDREN, Larry A, et al. Diode lasers and photonic integrated circuits. 2nd edition. Hoboken, New Jersey: John Wiley, 2012. ISBN 0470484128.
NPL2: YODER, Paul R. Mounting Optics in Optical Instruments. 2nd edition. Bellingham, Washington, USA: SPIE Press, 2008. ISBN 0819471291. p.581-628.

## Claims

1. Optoelectronic module (10), for example, laser projector, comprising
a baseboard (16) exhibiting a mounting surface (13) and
an optical component (11, 12), such as a mirror (11) or dichroic filter (12), joined on the mounting surface (13),
**characterized in**
a trough (17), such as of an aluminum alloy, affixed on the baseboard (16) by means of a screw (21), such as an M3 screw, connecting the trough (17) and baseboard (16),
a cube (18) affixed, preferably screwed, on the trough (17), and
a holder (19) holding the component (11, 12) and being kinematically mounted to the cube (18) by means of setscrews (20) connecting the holder (19) and cube (18),
wherein
the component (11, 12) is joined through an adhesive filling the trough (17), embedding the head of the screw (21), and partly immersing the cube (18), holder (19), and component (11, 12).

2. Module (10) according to Claim 1,
wherein
the adhesive is chemically reactive.

3. Module (10) according to Claim 2,
wherein
the adhesive consists of at least two components.

4. Module (10) according to Claim 3,
wherein
one of the components is polyurethane resin.

5. Module (10) according to any of the preceding claims, comprising
a pedestal (14) bearing the component (11, 12) and joined to the surface (13) by the adhesive.

6. Module (10) according to any of the preceding claims,
wherein
the surface (13) exhibits a recess (15) filled with the adhesive.

7. Module (10) according to any of the preceding claims comprising
an oblong hole (22) for aligning the trough (17) with respect to the baseboard (16).

8. Process for the manufacture of a module (10) according to Claim 7, comprising
mounting the holder (19) unto the cube (18),
screwing the cube (18) onto the trough (17),
aligning the trough (17), preferably by eye, through the hole (22),
affixing the trough (17) using the screw (21),
setting the component (11, 12) using the setscrews (20),
filling the trough (17) with the adhesive, and
curing the adhesive, preferably at constant temperature, while the component (11, 12) is immersed therein.

## Patentansprüche

1. Optoelektronisches Modul (10), zum Beispiel Laserprojektor, mit
einer Grundplatte (16), die eine Montagefläche (13) aufweist, und
einem optischen Bauteil (11, 12), zum Beispiel einem Spiegel (11) oder dichroitischen Filter (12), das auf der Montagefläche (13) angebracht ist, **gekennzeichnet durch**
eine Wanne (17), zum Beispiel aus einer Aluminiumlegierung, die auf der Grundplatte (16) mittels einer Schraube (21), beispielsweise einer M3-Schraube, welche die Wanne (17) und die Grundplatte (16) verbindet, befestigt ist,
einem Würfel (18), der an der Wanne (17) befestigt, vorzugsweise verschraubt ist, und
einem Halter (19), der das Bauteil (11, 12) hält und mittels Gewindestiften (20), die Halter (19) und Würfel (18) verbinden, kinematisch am Würfel (18) befestigt ist,
wobei
das Bauteil (11, 12) durch einen die Wanne (17) ausfüllenden Klebstoff verbunden ist, der den Kopf der Schraube (21) einbettet und den Würfel (18), den Halter (19) und das Bauteil (11, 12) teilweise bedeckt.

2. Modul (10) nach Anspruch 1,
wobei
der Klebstoff chemisch reaktiv ist.

3. Modul (10) nach Anspruch 2,
wobei
der Klebstoff aus mindestens zwei Komponenten besteht.

4. Modul (10) nach Anspruch 3,
wobei
eine der Komponenten Polyurethanharz ist.

5. Modul (10) nach einem der vorhergehenden Ansprüche,
umfassend
einen Sockel (14), der die Komponente (11, 12) trägt und durch den Klebstoff mit der Oberfläche (13) verbunden ist.

6. Modul (10) nach einem der vorangehenden Ansprüche,
wobei
die Oberfläche (13) eine mit dem Klebstoff gefüllte Ausnehmung (15) aufweist.

7. Modul (10) nach einem der vorhergehenden Ansprüche
mit
einem Langloch (22) zum Ausrichten der Wanne (17) in Bezug auf die Grundplatte (16).

8. Verfahren zur Herstellung eines Moduls (10) nach Anspruch 7,
umfassend
Montieren des Halters (19) auf den Würfel (18),
Verschrauben des Würfels (18) mit der Wanne (17),
Ausrichten des Troges (17), vorzugsweise nach Augenmaß, durch das Loch (22),
Befestigen des Troges (17) mit der Schraube (21),
Fixieren des Bauteils (11, 12) mit den Gewindestiften (20),
Befüllen der Wanne (17) mit dem Klebstoff und
Aushärten des Klebstoffs, vorzugsweise bei konstanter Temperatur, während das Bauteil (11, 12) von diesem bedeckt ist.

## Revendications

1. Module optoélectronique (10), par exemple, projecteur laser, comprenant
une plinthe (16) présentant une surface de montage (13) et
un composant optique (11, 12), tel qu'un miroir (11) ou un filtre dichroïque (12), fixé sur la surface de montage (13),
**caractérisé par**
une cuvette (17), par exemple en alliage d'aluminium, fixée sur la plinthe (16) au moyen d'une vis (21), par exemple une vis M3, reliant la cuvette (17) et la plinthe (16),
un cube (18) fixé, de préférence vissé, sur l'auge (17), et
un support (19) contenant le composant (11, 12) et monté cinématiquement sur le cube (18) au moyen de vis de réglage (20) reliant le support (19) et le cube (18),
dans lequel
le composant (11, 12) est assemblé à l'aide d'un adhésif qui remplit l'auge (17), encastre la tête de la vis (21) et immerge partiellement le cube (18), le support (19) et le composant (11, 12).

2. Module (10) selon la revendication 1,
dans lequel
l'adhésif est chimiquement réactif.

3. Module (10) selon la revendication 2,
dans lequel
l'adhésif est constitué d'au moins deux composants.

4. Module (10) selon la revendication 3,
dans lequel
l'un des composants est une résine de polyuréthane.

5. Module (10) selon l'une quelconque des revendications précédentes,
comprenant
un socle (14) portant le composant (11, 12) et relié à la surface (13) par l'adhésif.

6. Module (10) selon l'une quelconque des revendications précédentes,
dans lequel
la surface (13) présente une cavité (15) remplie de colle.

7. Module (10) selon l'une quelconque des revendications précédentes
comprenant
un trou oblong (22) pour l'alignement de l'auge (17) par rapport à la plinthe (16).

8. Procédé de fabrication d'un module (10) selon la revendication 7,
comprenant
monter le support (19) sur le cube (18),
visser le cube (18) sur l'auge (17),
aligner l'auge (17), de préférence à l'œil, à travers le trou (22),
fixer l'auge (17) à l'aide de la vis (21),
régler l'élément (11, 12) à l'aide des vis de réglage (20),
remplir l'auge (17) avec la colle, et
durcir la colle, de préférence à température constante, pendant que le composant (11, 12) est immergé dans la colle.
